(19) Europäisches Patentamt
European Patent Office
Office européen des brevets

(11) EP 0 653 239 B1

(12) **EUROPEAN PATENT SPECIFICATION**

(45) Date of publication and mention
of the grant of the patent:
**30.09.1998 Bulletin 1998/40**

(51) Int. Cl.⁶: **B01D 61/12**

(21) Application number: **94117686.9**

(22) Date of filing: **09.11.1994**

(54) **Intelligent and all-bearing control circuit device of reserve osmosis drinking water machine**

Intelligente Steuerschaltunganordnung einer Trinkwasser-Umkehrosmosevorrichtung

Dispositif de circuit de commande pour une installation produisant de l'eau potable par osmose inverse

(84) Designated Contracting States:
**DE ES FR GB IT**

(30) Priority: **12.11.1993 CN 93114252**

(43) Date of publication of application:
**17.05.1995 Bulletin 1995/20**

(73) Proprietor: **HSU, Chao Fou**
**Kaohsiung (TW)**

(72) Inventor: **HSU, Chao Fou**
**Kaohsiung (TW)**

(74) Representative:
**Grünecker, Kinkeldey,**
**Stockmair & Schwanhäusser**
**Anwaltssozietät**
**Maximilianstrasse 58**
**80538 München (DE)**

(56) References cited:
**EP-A- 0 142 567**      **EP-A- 0 438 372**
**WO-A-81/03542**      **US-A- 4 227 246**

## Description

The present invention relates to a drinking water machine according to the preamble of claim 1.

The main culprits of the water pollution today include industrial wastes , household wastes, farm pesticides, and the animal wastes produced by hog and poultry farms. As the pollution problems of the source of our drinking water , such as the rivers, have become increasingly worrisome, people tend to have a very little confidence in the quality of their drinking water provided by the water company. In addition, people's anxiety over the quality of their drinking water is further aggravated by the fact that the conditions of the water-supplying pipes and reservoirs are often found to be unsatisfactory. As a result, a variety of water-treating devices, such as water filtering devices, water purifying devices, water softening devices, etc., have become ubiquitous in places like offices, homes, factories , schools churches , and so forth . In general , such conventional water-treating devices as mentioned above are provided with one or more additional filtration means for enhancing the purity of the drinking water. The conventional drinking water machines are in fact effective in upgrading the quality of the drinking water; nevertheless the conventional drinking water machines are defective in design. The shortcomings inherent in the conventional drinking water machines are described explicitly hereinafter.

The conventional drinking water machines are not provided with a PPM (parts per million) device for monitoring the quality of the drinking water so produced. It is therefore questionable that the drinking water made by the conventional drinking water machines is really safe to drink. Without the reliable scientific data indicating to the effect that the drinking water produced by the conventional drinking water machines is excellent in purity, people's anxiety over the quality of their drinking water is not going to dissipate easily.

Some of the conventional drinking water machines are provided with the RO (reverse osmosis) filtration element, which is so arranged as to form a parallel tangent plane with the flowing direction of the water. As the water is forced under pressure against the RO filtration element by means of a manually operated switch valve which is intended to increase the speed and the flow of the water passing through the RO filtration element, some of the water can be caused to pass through the RO filtration element in a vertical angle instead of a parallel manner, so as to filter out salts and other impurities. The filtration element must be washed and cleaned periodically in accordance with the schedules specified by the manufacturer of the drinking water machine. In order to prolong the service life span of the drinking water machine, the impurities deposited in the RO filtration element must be removed so as to prevent them from becoming hardened to clog the RO filtration element of the drinking water machine. It happens from time to time that the cleaning schedules of the RO filtration element of the drinking water machine are unintentionally disregarded as to prevent them from becoming hardened to clog the RO filtration element of the drinking water machine. It happens from time to time that the cleaning schedules of the RO filtration element of the drinking water machine are unintentionally disregarded or overlooked. Furthermore, the chore of cleaning the RO filtration element is not something that people enjoy doing. It is an irresistible trend of the modern age that the consumers prefer an automated appliance to a manually operated appliance.

The RO filtration element of the conventional drinking water machine - mentioned above is capable of filtering out the impurities, such as the unwanted suspended particles , the chlorine molecules , the pesticides, various organic matters, heavy metals, and the organic compound such as chloroform which is a carcinogen. In addition, the RO filtration element is capable of deodorizing the water. If such impurities as mentioned above are allowed to accumulate in the RO filtration element, the filtering effect of the RO filtration element will be seriously undermined to an extent that bacteria and fungi can grow and flourish on the accumulated impurities, thereby bringing about a potential health hazard to the users of the water drinking machine. Moreover, if the water drinking machine is used less often, the service life span of the RO filtration element of the water drinking machine is prolonged accordingly. Therefore, the scheduled maintenance work of the water drinking machine is likely to be delayed or even skipped. The quality of operating performance of the drinking water machine is often compromised by the lack of the routine maintenance work of the water drinking machine.

The conventional drinking water machine is not provided with a warning system serving to keep the user of the machine to be on the alert for any indication that the drinking water machine is no longer working properly to make the drinking water that is safe to drink.

EP 0 142 567 A1 discloses a control apparatus for controlling the quantity of a fluid outputted by a reverse osmosis system. According to a preset desired freshwater rate the control apparatus automatically calculates the opening of a wave in that a required pressure at the inlet of a reverse osmosis device is generated. As a result the reverse osmosis device produces fresh water at a flow rate equal to the preset freshwater flow rate.

From US 4,227,246 a microcomputer controlled monitoring system for measuring physical or chemical properties of water and other fluids is known. For operating the system it comprises a keyboard, a display and an electric power supply unit.

It is the object of the present invention to provide an intelligent and all-bearing control circuit device for a reverse osmosis drinking water machine capable to permanently insure a maximum quality of the produced drinking water.

According to a preferred embodiment of the present invention this object is solved by providing an all-bearing control circuit device capable of automatically monitoring the quality of the drinking water made by the RO drinking water machine and capable of cleaning the filtration element of the RO drinking water machine. This circuit device is further capable of automatically monitoring the functional integrity of the filtration element and of automatically displaying an advance information on the timing of replacing the disabling filtration element, so as to ensure that the RO drinking water machine always produces drinking water of the highest quality.

This circuit device is further capable of automatically causing the RO drinking water machine to cease producing drinking water at such time when the PPM (parts per million) value of the drinking water or the service life of the RO drinking water machine are not in conformity with the specified safety standards, so as to ensure that the RO drinking water machine always makes the highest quality drinking water.

The circuit device is further capable of automatically monitoring and displaying the information on the working status of every portion of the RO drinking water machine, so as to keep the user of the RO drinking water machine informed of the current status of the use of the RO drinking water machine.

The circuit device is further capable of working as an AM-FM radio for the listening pleasure of the user of the RO drinking water machine.

Finally the circuit device may be used for monitoring the water mixing ratio of the sewage treatment, for testing an electroplating gauge of a chemical tank or a straining pool, etc.

In the following a preferred embodiment of the present invention will be described in more detail by referring to the accompanied figures, wherein

FIG. 1 shows a block diagram of an intelligent and all-bearing control circuit device of a reverse osmosis drinking water machine of the present invention,
FIG. 2 shows a detailed circuit diagram of a microcomputer unit of the present invention,
FIG. 3 shows a detailed circuit diagram of a water monitoring system of the present invention,
FIG. 4 shows a detailed circuit diagram of an output unit and a switch system of the present invention,
FIG. 5 shows a detailed circuit diagram of a driving circuit of the present invention,
FIG. 6 shows a detailed circuit diagram of an electric power driving system of the present invention.

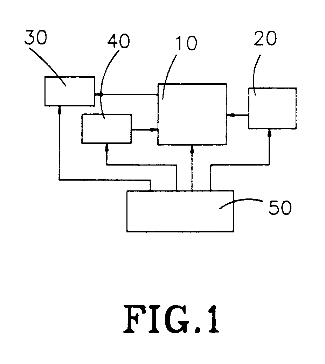

As shown in FIG. 1, an intelligent and all-bearing control circuit device of a RO drinking water machine of the present invention is composed of a microcomputer unit 10, a water monitoring system 20, an output unit 30, a switch system 40, and an electric power driving system 50.

The microcomputer unit 10 has an output end connected with an input end of the output unit 30 and has an input end connected respectively with an output end of the water monitoring system 20 and with an output end of the switch system 40. The microcomputer unit 10 is used in processing the signals transmitted thereto from the various peripheral systems of the present invention.

The water monitoring system 20 sends out a signal to the microcomputer unit 10 via its output end which is connected with the input end of the microcomputer unit 10. The water monitoring system 20 is used in measuring the water quality signal.

The output unit 30 is connected at the input end thereof with the output end of the microcomputer unit 10. The output unit 30 is used in displaying an instruction sent by the microcomputer unit 10 in which the signals from the water monitoring system 20 and the switch system 40 are processed.

The switch system 40 is connected at the output end thereof with the input end of the microcomputer unit 10. The switch system 40 is used in the data searching and the data setup.

The electric power driving system 50 serves as a source for providing the entire control circuit device of the present invention with an operating power.

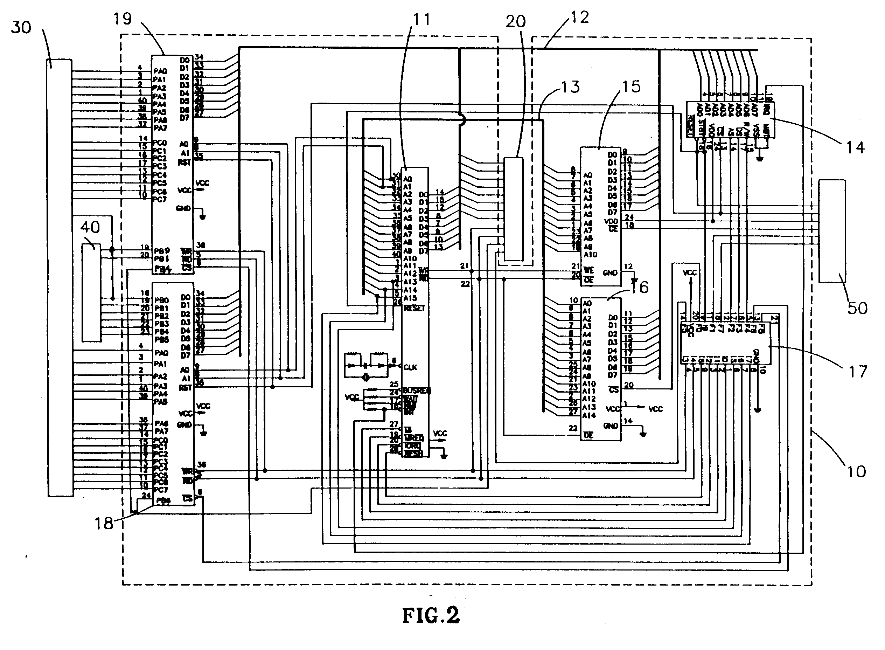

Now referring to FIG. 2, the microcomputer unit 10 of the present invention is shown to comprise various component parts, which are described hereinafter.

A central processing unit 11 has data pins D0-D7 parallel to one another and connected with a data bus 12 and further has address pins A0-A15 parallel to one another and connected with an address bus 13. The data reading pins RD of the central processing unit 11 are connected respectively with the pins OE of a random access memory 15 and an erasable programmable read only memory 16, the pin I4 of a bolted lock decoder 17, and the pins RD of a first interface circuit 18, a second interface circuit 19 and an analog-digital converter 25. The data writing pins WR of the central processing unit 11 are connected respectively with the pin WE of the random access memory 15, the pin I3 of the bolted lock decoder 17, and the pins WR of the first interface circuit 18, the second interface circuit 19 and the analog-digital converter 25. The central processing unit 11 serves as a control center of the entire control circuit device of the present invention. In other words, the central processing unit 11 controls an overall activity in connection with the access of data relating to the PPM value, the value of the volume of drinking water made so far, the service life, the time, etc.

The data bus 12 is a conductor serving as a common connection of the data pins of the central processing unit 11, the time clock IC14, the random access memory 15, the erasable programmable read only memory 16, the first interface circuit 18, the second interface circuit 19, the analog-digital converter 25 and so forth.

The address bus 13 is a conductor serving as a common connection of the address pins of the central processing unit 11, the random access memory 15, the erasable programmable read only memory 16 and other elements.

The time clock IC14 has address/data pins AD0-AD7 connected with the data bus 12 and further has an IRQ pin which is connected with an interruption pin INT of the central processing unit 11.

The random access memory (RAM) 15 has data pins D0-D7 connected with the data bus 12 and has address pins A0-A10 connected with the address bus 13. The RAM 15 is used in storing information on the time calculated by the time clock IC14 and the water quality PPM value determined by the water monitoring system 20 or on the service life of each filtration element.

The erasable programmable read only memory (EPROM) 16 has data pins D0-D7 connected with the data bus 12 and has address pins A0-A14 connected with the address bus 13. The EPROM 16 is used to provide the key search program , the self-monitoring program, the wash-clean program, the program for determining the volume of drinking water to be made, the automatic reading program, and the storage of information on the service life of the filtration element. On the basis of the key search program, the central processing unit 11 is responsible for the search instruction to make sure if the first and the second interface circuits 18, 19 are grounded with the keying pins SW1-SW8 of the first and the second keying systems 41, 42. If the grounding has taken place, the functional service program of the key is ready to be read from the EPROM 16. The functional service program indicates that the function of each key is written as a program in the form of an interruption service program. The self-monitoring program is used by the central processing unit 11 in determining the operational integrity of the entire control circuit device of the present invention by comparing the data already stored in the EPROM 16 with the data transmitted from the time clock IC14, the ROM 15, the EPROM 16, the bolted lock decoder 17, the first interface 18, the second interface 19, the analog-digital converter 25, the LCD display circuit 32, and the speech circuit 33. The wash-clean program is written on the basis of technical specifications of the filtration element provided originally by the manufacturer of the filtration element, such as the service life of the filtration element, the wash-clean schedules, the volume (cc/minute) of the drinking water pumped by the pump, etc. The program for determining the volume of the drinking water to be made is written on the basis of such information as each volume (cc/minute) of the drinking water pumped by the pump, which is stored in the RAM 15. Such volume data are transmitted in a cumulative form to the central processing unit 11 in which the volume data are compared with such information as the service life of the filtration element, which is originally stored in the EPROM 16. The automatic reading program is written on the basis of the information such as each volume (cc/minute), the cumulative volume, the water quality PPM value, the displayed state of the out-of-order points , and the operating conditions of the reverse osmosis membrane and of each filtration element.

The bolted lock decoder 17 has pins I0, I1, I2, I5, I6, I7, I8 and I9, which are connected respectively with the control pins M1, MEEQ, IORQ, A13, A14, A15 and RFSH of the central processing unit 11, and the STBY or RESET pin of the time clock IC14. The output end pins F0, F1, F7, F2, F3, F4, F5, F6 and F8 of the bolted lock decoder 17 are connected respectively with the CS pin of the EPROM 16, the CEIN pin and the WATCH pin of a standby power source IC52, the AS pin, the DS pin and R/W pin of the time clock IC14 , the CS pin of the analog-digital converter 25, the CS pin of the first interface circuit 18, and the CS pin of the second interface circuit 19. The bolted lock decoder 17 is used in coding and decoding the key search program , the self-monitoring program, the wash-clean program, the water making volume computing program, and the automatic reading program, which are all stored in the EPROM 16.

The first interface circuit 18 is a parallel output input interface and provided with the data pins D0-D7, which are connected with the data bus 12. The data pins A0 and A1 of the first interface circuit 18 are connected respectively with the A0 and A1 pins of the central processing unit 11 and the A0 and the A1 pins of the second interface circuit 19. The PA0-PA2 pins of the first interface circuit 18 are connected with an output end of the driving circuit 31. The first interface circuit 18 serves as an interface for transmitting information among the driving circuit 31, the LCD displaying the driving circuit 32, the speech circuit 33 , the first switch system 41 and the central processing unit 11.

The second interface circuit 19 is a parallel output input interface and provided with the data pins D0-D7 which are connected with the data bus 12. The second interface circuit 19 serves as an interface for transmitting the information between the central processing unit 11 and the AM-FM circuit 36 . The first and the second interface circuits 18 and 19 may be replaced by a plurality of parallel output input interfaces.

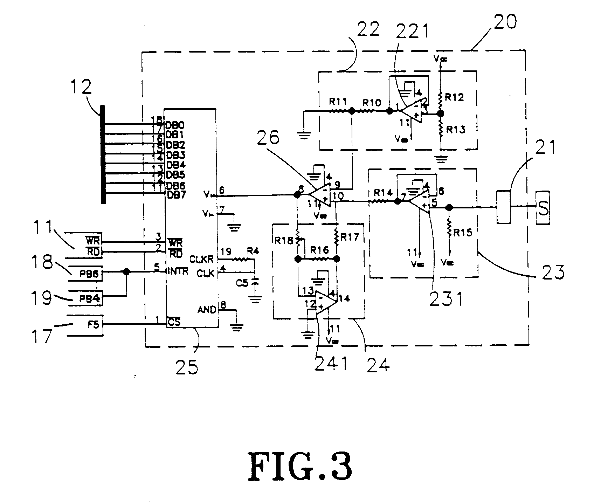

As shown in FIG. 3, the water monitoring system 20 of the present invention comprises various component parts which are described hereinafter.

A water quality testing device 21 has a test input end that is disposed in a water tank S for examining the PPM value of the water.

A first amplifying circuit 22 is composed of resistances R10, R11, R12 and R14 , and a first operation amplifier 221 which has a nonopposite phase and connected with the midpoint of the load resistance R10 and the load resistance R11. In addition, the first operation amplifier 221 has an opposite phase end which is connected with an output end of the first operation amplifier 221 and one end of the load resistance R12 in a parallel manner. The midpoint of the load resistance R12 and the load resistance R13 is connected with the nonopposite phase end of a fourth operation amplifier 26.

A second operation amplifier 23 is composed of load resistances R14, R15, and a second operation amplifier 231. The opposite phase of the second operation amplifier 231 is connected in a parallel manner with the test input end of the water quality testing device 21 and with one end of the load resistance R14. The nonopposite phase end of the second operation amplifier 231 is connected in a parallel manner with an output end of the second operation amplifier 231 and with one end of the load resistance R15. Another end of the load resistance R15 is connected with the nonopposite phase end of the fourth operation amplifier 26.

A feedback amplifying circuit 24 is made up of load resistances R16 and R17, a variable resistance R18, and a third operation amplifier 241. The nonopposite phase end of the third operation amplifier 241 is grounded and connected respectively with the load resistance R16 and the variable resistance R18. The output end of the third operation amplifier 241 is connected respectively with the load resistance R16 and the load resistance R17 whose another end is connected with the nonopposite phase end of the fourth operation amplifier 26.

An analog-digital converter 25 has data pins DB0-DB7 which are connected with the data bus 12, a VI pin which is connected with the output end of the fourth operation amplifier 26 and with another end of the variable resistance R18 of the third operation amplifier 241, and an INTR pin which is connected with the PB6 pin of the first interface circuit 18. The analog-digital converter 25 is used to receive from the fourth operation amplifier 26 the analog signals, which are then converted into digital signals.

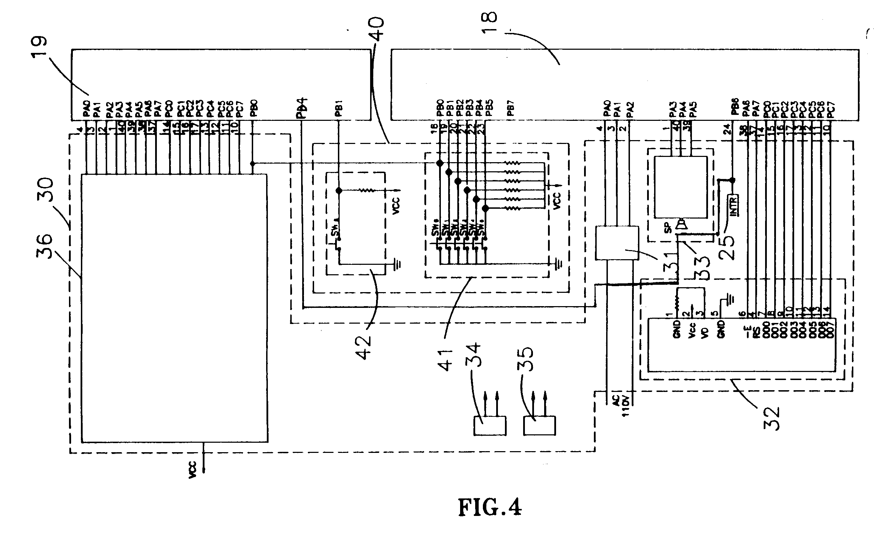

As shown in FIG. 4, the output unit 30 of the present invention comprises the component parts which are described hereinafter.

A driving circuit 31 connected with the PA0-PA2 of the first interface circuit 18 is used in driving a pump M, an electromagnetic valve and indicating lights L1-L4.

An LCD displaying circuit 32 has data pins 001-007, an enabling pin -E, and a read/write pin RS, which are connected respectively with pins PC0-PC7, PA6 and PA7 of the first interface circuit 18. The LCD displaying circuit 32 is used to display the data of the current time, the time when the replacement of each filtration element took place, the PPM value, the current value of water making volume, the total value of water making volume, the mechanical breakdown, etc., which are all stored in the RAM 15.

A speech circuit 33 is connected with the pins PA3-PA5 of the first interface unit 18 and is composed of a speech synthesizing integrated circuit IC and a speaker SP . The speech circuit 33 is used in receiving a breakdown signal and a warning signal to replace the worn-out filtration element, which are detected by the self-monitoring program. The sounding circuit 34 of the output unit 30 may be replaced by the speech circuit 33 of the lighting circuit 35 and/or a buzzing device.

An AM/FM circuit 36 has data pins which are connected respectively with pins PA0-PA7 and pins PC0-PC7 of the second interface circuit 19. The AM/FM circuit 36 further has an interruption pin INT which is connected with the pin PB0 of the first interface circuit 18. The AM/FM circuit 36 is used to receive the waves of the assigned frequencies of broadcasting stations, which are converted into the acoustic signals that are sent to the microcomputer unit 10 (as shown in FIG. 1) and then to the speech circuit 33.

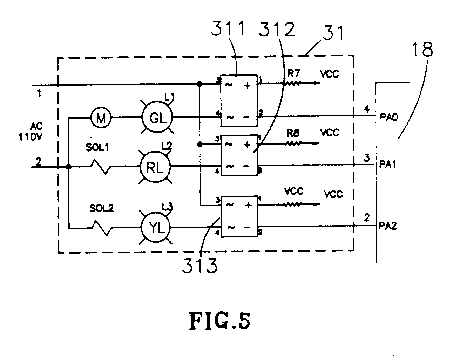

Now referring to FIG. 5 , the driving circuit 31 of the present invention is shown to comprise a first driving device 311 , a second driving device 312 , a third driving device 313 , an operation indicating light L1, a water-making indicating light L2, a wash-clean indicating light L3, a pump M, a first electromagnetic valve SOL1, and a second electromagnetic valve SOL2. The direct current ends of the first driving device 311, the second driving device 312 and the third driving device 313 are connected respectively with the pins PA0, PA1 and PA2 of the first interface circuit 18. The alternating current ends of the first driving device 311, the second driving device 312 and the third driving device 313 are connected respectively with the operation indicating light L1, the water-making indicating light L2 and the wash-clean indicating light L3, which are in turn connected respectively at another pin thereof with the pump M, the first electromagnetic valve SOL1 and the second electromagnetic valve SOL2.

As shown in FIG. 4, the switch system 40 of the present invention is made up of one set of key system. The key SW1 is a starting key. The key SW2 is used for setting up the data at the time when the first filtration element is replaced. The key SW3 is used for setting up the data at the time when the second filtration element is replaced. The key SW4 is used in setting up the data. The SW5 is used in searching the data. The key SW6 is used to actuate the water-making switch. The key SW7 is used to actuate the mechanism permitting a manual wash-clean operation of the filtration element. All of the keys mentioned above are connected with any one of the output/input pins of the first interface circuit 18. The keg SW8 is used in starting the AM/FM circuit 36 and is connected with any one of the output/input pins of the second interface circuit 19.

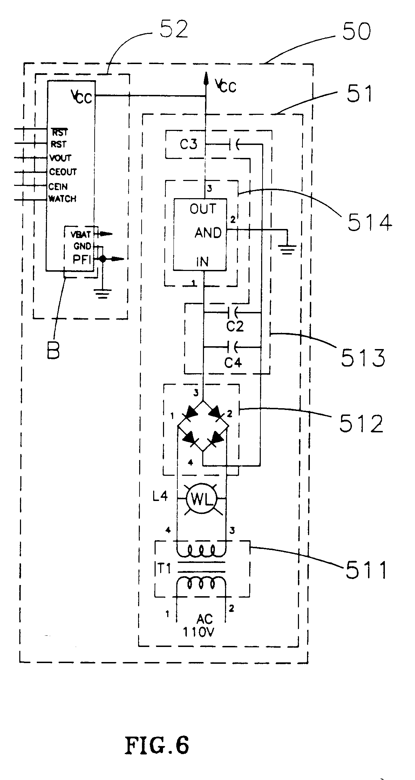

As shown in FIG. 6, the electric power driving system 50 of the present invention comprises mainly a direct current power supplying device 51 and a standby uninterrupted power source IC.

The direct current power supplying device 51 is composed of a transformer 511 , a power source indicating light L4 , a bridge rectifier 512, a filtering capacitor 513, and a voltage stabilizer 514.

The direct current power supplying device 51 is used for supplying the power that is required for the normal operation of the microcomputer unit 10 , the water-monitoring system 20 , the driving circuit 31 of the output unit 30, the switch system 40, etc.

The standby uninterrupted power source IC 52 has signal control pins which are connected respectively with the RESET pin of the central processing unit 11, the STBY or RESET or VDD pin of the time clock IC14, the VDD and the CE pins of the RAM 15, and the RST pins of the first and the second interface circuits 18 and 19 . The standby uninterrupted power source IC 52 can be put into service on an emergency basis at such time when a power outage breaks out . In addition, the standby uninterrupted power source IC 52 may be provided respectively at the pins VBAT and GND with a battery B. The working of the present invention is described explicitly hereinafter.

Upon completion of installing the drinking water machine of the present invention, the key SW1 (COLD START-SW) is pressed. Under the control of the central processing unit 11, the search for a function service program stored in the EPROM 16 is then under way under the instruction of the key search program via the first interface circuit 18. The function service program so read is a program for restarting the drinking water machine. In the meantime, the bolted lock decoder 17 begins executing the program having the program decoding function , so as to enable the entire control circuit to reach the correct address to read the data in order to enable the entire control circuit to work normally.

As the entire control circuit of the drinking water machine of the present invention works normally, the key SW4 (SET-SW) is pressed subsequently. Under the control of the central processing unit 11, the search for a function service program stored in the EPROM 16 can be then under way under the instruction of the key search program via the first interface circuit 18. The function service program so read is a program instructing the time clock IC14 to measure the time in a cumulative manner from zero up to the designated time and the date. The key SW4 is then pressed so that the pin F9 of the bolted lock decoder 17 sends out a signal to the time clock IC14 in which the time and the date data are locked in. The time and the date data are then recorded and stored in the RAM 15 via the data bus 12. In the meantime , such time and date data are transmitted to the LCD displaying circuit 32 from the data bus 12 via the pins PC0-PC7 of the first interface circuit 18.

When a maintenance worker has completed the work of replacing the first filtration element, the data , such as the time and the date upon which the replacing of the first filtration element takes place, can be set up by the key SW1 (FILTER 1 SET-SW). In case of the second filtration element that is replaced , the key SW2 is used for setting up the time and the date data. Under the control of the central processing unit 11, the search for a function service program stored in the EPROM 16 can be then under way under the instruction of the key search program via the first interface circuit 18. The function service program so read is a program instructing the bolted lock decoder 17 to lock in the time and the date data of the time clock IC14. In the meantime, the time and the date data of the time clock IC14 are recorded and stored in the RAM 15 via the data bus 12 . Such time and date data are also transmitted from the data bus 12 to the LCD displaying circuit 32 of the output unit 30 via the pins PC0-PC7 of the first interface circuit 18.

When the owner or user of the drinking water machine of the present invention desires to know the current status of the use of the machine , he or she must press the key SW5 (SEARCH-SW). Under the control of the central processing unit 11 , the search for a function service program stored in the EPROM 16 can be then under way under the instruction of the key search program via the first interface circuit 18. The function service program so read is a program enabling an access to the various use data of the machine, which are stored in the RAM 15 . Such data include the date upon which the machine was installed, the current time , the dates upon which the filtration elements were replaced , the PPM value , the current value of drinking water making volume, the total value of drinking water making volume , etc. Such data are also transmitted from the data bus 12 to the LCD displaying circuit 32 of the output unit 30 via the pins PC0-PC7 of the first interface circuit 18.

The present invention is additionally provided at the pin PB7 of the first interface circuit 18 with a key SW7. The user of the drinking water machine of the present invention may have to clean the machine manually at such time when the automatic cleaning device is out of order. By pressing the keg SW7 and under the control of the central processing unit 11 , the search for a function service program stored in the EPROM 16 can be then under way under the instruction of the key search program via the first interface circuit 18 . The function service program so read is a program instructing the pins PAO and PA2 of the first interface circuit 18 to dispatch respectively a signal to the first driving device 311 and the third driving device 313 so as to actuate the pump M and the second electromagnetic valve SOL2 . As a result , both the operation indicating light L1 and the wash-clean indicating light L3 are lighted up.

If the level of the drinking water in the drinking water machine of the present invention happens to be under the standard value , the key SW6 is closed . Under the control of the central processing unit 11 , the search for a function service program stored in the EPROM 16 is then under way under the instruction of the key search program via the first interface circuit 18 . The function service program so read is a program instructing the pins PAO and PA1 of the first interface circuit 18 to dispatch respectively a signal to the first driving device 311 and the second driving device 312 so as to actuate the pump M and the first electromagnetic valve SOL1. As a result, the operation indicating light L1 and the drinking water indicating light L2 are both lighted up.

The drinking water machine of the present invention is provided with an automatic displaying means . The central processing unit 11 is instructed at an interval by the automatic reading program to read the current data stored in the RAM 15 . The current data , such as the current value of the drinking water making volume , the PPM value of the water quality and the displaying status of the out-of-order point, are displayed via the LCD displaying circuit 32 of the output unit 30.

The central processing unit 11 of the drinking water machine of the present invention is capable of testing automatically to find out if there is any faulty point in the entire control circuit at such time when the automatic displaying process is in progress. The faulty point of the entire control circuit is located and displayed via the LCD displaying circuit 32 of the output unit 30 . In addition , the maintenance worker is reminded of the trouble spot in the control circuit by a warning signal in the from of sound or light via the speech circuit 33.

The drinking water machine of the present invention may be used as an AM/FM radio by pressing the key SW8 . Under the control of the central processing unit 11 , the AM/FM circuit 36 is actuated via the second interface circuit 19. In the meantime, the automatic displaying function of the drinking water machine is interrupted for the time being.

The user of the drinking water machine of the present invention may listen to the AM/FM radio while the drinking water machine is in use . The water making key SW6 is closed while a signal is sent to the AM/FM circuit 36 . Under the control of the central processing unit 11 , the displaying status and the speech function of the AM/FM circuit 36 are interrupted immediately . In the meantime , the automatic displaying function of the drinking water machine is resumed. After a while , the displaying status and the speech function of the AM/FM circuit 36 are resumed.

The electric power driving system 50 of the drinking water machine of the Present invention is provided additionally with a standby uninterrupted power source IC52 ready to be put into service on an emergency basis . The standby uninterrupted power source IC52 can be activated before the voltage of the regular power source drops to a specified value. As a result , the output of the standby power source is sent to the time clock IC14 and the RAM 15 via the pin VOUT so as to prevent the work stoppage of the time clock IC14 and the possible loss of such important data as the date on which the filtration element was replaced , the current value of the water making volume of the water monitoring system 20 , the PPM value, etc.

The advantages inherent in the present invention are described hereinafter.

The present invention is provided with means capable of monitoring the quality of the drinking water automatically . Under the control of the central processing unit 11, the PPM value of the drinking water is provided by the water quality testing device 21 via the fourth operation amplifier 26. The PPM value is then transmitted to the first interface circuit 18 via the data bus 12. Thereafter, a signal is sent via the pins PC0-PC7 of the first interface circuit 18 to the LCD displaying circuit 32 of the output unit 30. As a result , the user of the drinking water machine of the present invention is able to tell easily the quality of the drinking water on the basis of the displayed PPM value.

The present invention is provided with means capable of cleaning automatically the RO filtration elements . As the PPM value shown by the water monitoring system 20 remains within a specific range , the central processing unit 11 computes the current service life of each of the RO filtration elements on the basis of the time set up by the wash-clean program stored in the EPROM 16 . If the calculated current service life approximates the service life stored in the RAM 15 , the pins PA0-PA2 of the first interface circuit 18 dispatch respectively a wash-clean signal to the first driving device 311 and the third driving device 313 so as to actuate the pump M and the second electromagnetic valve SOL2 to wash and clean the RO filtration elements automatically.

The present invention is provided with means capable of giving an advance warning before the replacing of the filtration element is called for . Under the control of the central processing unit 11 , the current service life of each of the RO filtration elements is computed on the basis of the water-making volume computing program . The computed values are cumulated in accordance with a cumulative program. If the cumulated current service life of the filtration element approximates the service life stored in the RAM 15 , the central processing unit 11 sends out at intervals a signal to the LCD displaying circuit 32 of the output unit 30 via the first interface circuit 18 . Such a signal is displayed in the form of sound or light to remind the user of the exact time when the filtration elements must be replaced.

The present invention is provided with means capable of shutting off automatically the process of making the drinking water at such time when the PPM value detected by the water quality testing device 21 is shown to be such that the drinking water so made is not safe for human consumption. Under the control of the central processing unit 11 , the first interface circuit 18 is instructed to stop sending any signal to the driving circuit 31 . However , the displayed warning signal reminding the user of the worn-out filtration elements remains in operation until such time when the worn-out filtration elements are replaced . The displayed warning signal will disappear as soon as the keys SW1 and SW2 are pressed.

## Claims

1. An intelligent and all-bearing control circuit device of a reverse osmosis drinking water machine comprising:

a microcomputer unit (10) for processing functional signals received from various peripheral systems,

an output unit (30) for displaying information worked out by the microcomputer unit (10),

a switch system (40) bearing a set of keys for communicating with said microcomputer unit (10), and

an electric power driving system (50) serving as a source of power for the components of the control circuit device,

**characterized by**

a water monitoring system (20) for monitoring the quality of the produced water and for sending a corresponding quality signal via its output to the microcomputer unit (10), and

means for automatically cleaning the reverse osmosis filtration elements according to their current service life computed by the microcomputer unit (10),

wherein said output unit (30) gives an advance warning for the replacement of said reverse osmosis filtration elements.

2. The control circuit device in accordance with claim 1 wherein said microcomputer unit (10) comprises:

a central processing unit (11) provided with data pins (D0-D7) connected with a data bus (12), address pins (A0-A15) connected with an address bus (13), a data reading pin (RD) connected with a pin ($\overline{OE}$) of a random access memory RAM (15), a pin (OE) of an erasable programmable read only memory EPROM (16), a pin (14) of a bolted lock decoder (17), a pin (RD) of a first interface circuit (18), a pin (RD) of a second interface circuit (19) and a pin (RD) of an analog/digital A/D converter (25), said central processing unit (11) further provided with data writing pins (WR) connected with a pin (WE) of said RAM (15), a pin (13) of said bolted lock decoder (17), a pin (WR) of said first interface circuit (18) a pin (WR) of said second interface circuit (19) and a pin ($\overline{WR}$) of said A/D converter (25) for controlling the access of data such as a part per million value, a current status of service life of filtration elements, a total service life of said filtration elements, the time;

wherein the data bus (12) serves as a common connection conductor for data pins (D0-D7) of said central processing unit (11), a time clock IC (14), said RAM (15), said EPROM (16), said first interface circuit (18), said second interface circuit (19) and said A/D converter (25);

wherein the address bus (13) serves as a common connection conductor for address pins (A0-A15) of said central processing unit (11), ,said RAM (15), and said EPROM (16);

wherein the time clock IC (14) provides address data pins(AD0-AD7) connected with said data bus (12), and a pin (IRQ) connected with an interruption pin (INT) of said central processing unit (10);

wherein the RAM (15) provides the data pins (D0-D7) connected with said data bus (12) and address pins (A0-A10) connected with said address bus (13) and stores data such as the time computed by said time clock IC (14), said part per million value detected by said water monitoring system (20) and said current status of service life of filtration elements;

wherein the EPROM (16) provides data pins (D0-D7) connected with said data bus (12) and address pins (A0-A14) connected with said address bus (13) and stores a key search program, a self-monitoring program, a wash-clean program, a water-making volume computing program, an automatic reading program as well as the service lives of each filtration elements;

wherein the bolted lock decoder (17) provides pins I0, I1, I2, I5, I6, I7, I8 and I9 respectively connected with control pins M1, MREQ, IORQ, A13, A14, A15 and RFSH of said central processing unit (11) and with STBY pin or RESET pin of said time clock IC (14), said bolted lock decoder (17) further provides output end pins F0, F1, F2, F3, F4, F5, F6 and F8 which are respectively connected with CS pin of said EPROM (16), CEIN and WATCH pins of a standby power source IC (52), AS pin, DS pin and A/W pin of said time clock IC (14), CS pin of said first interface circuit (18), and said CS pin of said second interface circuit (19), said bolted lock decoder (17) serves to lock and decode said key search program, said self-monitoring program, said wash-clean program, said water-making program, and said automatic reading program,

wherein the first interface circuit (18) has data pins (D0-D7) connected with said data bus (12), pins (A0,A1) respectively connected with A0 and A1 pins of said central processing unit (11) and A0 and A1 pins of said second interface circuit (19), and PA0 -PA2 pins connected with an output end of a driving circuit (31), said first interface circuit (18) serves as a data transmitting interface among said driving circuit (31), a LCD displaying circuit (32), a speech circuit (33), a first switch system (41), and said central processing unit (11); and

wherein the second interface circuit (19) has data pins (D0-D7) connected with said data bus (12) and serves as a data transmitting interface between the AM/FM circuit (36) and the central processing unit (11).

3. The control circuit device in accordance with claim 2, wherein said key search program instructs said central processing unit (11) to search for a key function service program stored in said EPROM (16) when at least one key of the first interface circuit of the first key system is grounded.

4. The control circuit device in accordance with claim 2 or 3 wherein said key function service program designates the function of each key and is written in the form of an interruption service program.

5. The control circuit device in accordance with one of claims 2 to 4 wherein said self-monitoring program instructs the central processing unit (11) to compare data stored in said EPROM (16) with data transmitted from said time clock IC (14), said RAM (15), said bolted lock decoder (17), said first interface circuit (18), said second interface circuit (19), said A/D converter (25), said LCD displaying circuit (32) and said speech circuit (33), so as to determine if there is a faulty point in said control circuit device.

6. The control circuit device in accordance with one of claims 2 to 5 wherein said wash-clean program is based on manufacturer's specifications of said filtration elements, said specifications being the service lives of said filtration elements, a scheduled washing and cleaning of said filtration elements and a water-making volume (cc/minute) of a pump.

7. The control circuit device in accordance with one of claims 2 to 6, wherein said water-making volume computing program is written on the basis of said water-making volume (cc/minute) of said pump (M) so as to compute a cumulated value of a series of water-making volumes for each of said filtration elements, with said series of water-making volumes being transmitted to said RAM (15) and with said cumulated value being transmitted to said central processing unit (11) which compares said cumulated value with a rated service life of each of said filtration elements and said rated service life being stored in said EPROM (16).

8. The control circuit device in accordance with on of claims 2 to 7 wherein said automatic reading program is intended to read from said RAM (15) the data such as said series of water-making volumes of each of said filtration elements, said cumulated value of said series of water-making volumes of each of said filtration elements, said PPM value, the displaying state of said faulty point in said control circuit device, the current state of the use of a reverse osmosis membrane and the current state of the use of each of said filtration elements.

9. The control circuit device in accordance with one of claims 1 to 8, wherein said water monitor system (20) comprises:

a water quality testing device (21) having a signal testing input end which is disposed in a water tank (S) for testing said part per million value;

a first amplifying circuit (22) composed of load resistance (R10, R11, R12, R13) and a first operation amplifying device (221) provided with a nonopposite phase end connected with a midpoint of said load resistance R10 and R11 connected in series, said first operation amplifying device (221) further provided with an opposite phase end connected in a parallel manner with an output end thereof and one end of said load resistance R12, said load resistance R12 and R13 having a midpoint connected with a nonopposite phase end of a fourth operation amplifying device (26);

a second amplifying circuit (23) composed of load resistance (R14, R15) and a second operation amplifying device (231) having an opposite pahse end connected in a parallel manner with an output end of aid water quality testing device (21) and with one end of said load resistance R14, said second operation amplifying (231) further having a nonopposite phase end connected in a parallel manner with an output end thereof and one end of said load resistance R15 having another end that is connected with said nonopposite phase end of said fourth operation amplifying device (26);

a feedback amplifying circuit (24) composed of load resistances R16, R17, a variable resistance R 18, and a third operation amplifying device (241) having a nonopposite phase end that is grounded and having an opposite phase end connected in a parallel manner with said load resistance R16 and one end of said variable resistance R 18, said third operation amplifying device (241) having an output end connected respectively with another end of said load resistance R16 and one end of said load resistance R17 having another end that is connected with said nonopposite phase end of a fourth operation amplifying device (26); and

an A/D converter (25) having data pins (DB0-DB7) connected with said data bus (12), a VI pin connected with an output end of said fourth operation amplifying device (26) and with another end of said variable resistance (R18) of said third operation amplifying device (241), and an INTR pin connected with input pin(PB6) of said first interface circuit (18), said analog digital converter (25) serving to receive from said fourth operation amplifying device (26) an analog signal, which is then converted by said A/D converter (25) into a digital signal.

10. The control circuit device in accordance with one of claims 1 to 9, wherein said output unit (30) comprises:

a driving circuit (31) connected with output pins of said first interface circuit (18) and intended to drive the pump (M), an electromagnetic valve and an indication light (L1-L4);

an LCD displaying circuit (32) having data pins (001-007), enable pins, read/write pins, which are connected with data output pins PC0-PC7, PA6, PA7) of said first interface circuit (18), said LCD displaying circuit (32) serving to display data stored in said RAM (15);

a speech circuit (33) connected with output points (PA3-PA5) of said first interface circuit (18) and composed of a speech synthesizer IC and a speaker (SP), said speech circuit (33) serving to receive signals warning a faulty point in said control circuit device or calling for the replacement of said filtration element, said signals being detected by said self-monitoring program; and

an AM/FM circuit (36) having data pins, which are connected with data bus (12), said AM/FM circuit (36) further having a signal control pin connected with an input pin of said first interface circuit (18), said AM/FM circuit (36) serving to receive radio signals from a broadcasting station, in order converted into acoustic signals which are subsequently transmitted to said microcomputer unit (10).

11. The control circuit device in accordance with claim 10 wherein said driving circuit (31) of said output unit (30) comprises a first driving device (311), a second driving device (312), a third driving device (313), an operation indication light (L1), a water-marking indication light (L2), a wash-clean indication light (L3), a pump, a first electromagnetic valve and a second electromagnetic valve, with said first driving device, said second driving device (312) and third driving device (313) respectively having a direct current end respectively connected with output pins of said first interface circuit (18), and further respectively having an alternating current end respectively connected with one pin of said operation indication light (L1), said water-making indication light (L2) and said wash-clean indication light (L3) with said operation indication light (L1), said water-making indication light (L2) and said wash-clean indication light (23) respectively having another pin respectively connected with said pump (M), said first electromagnetic valve, (SOL 1) and said second electromagnetic valve (SOL 2).

12. The control circuit device in accordance with claim 10 or 11, wherein said speech circuit (33) of said output unit may be replaced by a sound circuit capable of buzzing or by a light circuit capable of illuminating.

13. The control circuit device in accordance with one of claims 1 to 12, wherein said switch system (40) is composed of one set of key system comprising a key SW1 for staring said control circuit device, a key SW2 for setting up data in connection with the replacing of a first filtration element, a key SW3 for setting up data in connection with the replacing of a second filtration element, a key SW4 for setting up data, a key SW5 for data searching, a key SW6 for starting a water-making switch, a key SW7 for washing and cleaning said filtration elements manually, and a key for starting said AM/FM circuit, with all connection points of said keys SW1, SW2, SW3, SW4, SW5, SW6 and SW7 being connected with any of the output/input pin of said first interface circuit (18), wherein connection point of said key SW8 is used for starting the AM/FM circuit (36) and is connected with the switch pins of the AM/FM circuit.

14. The control circuit device in accordance with one of claims 1 to 13, wherein said electric power driving system (50) comprises:

a direct current power supplying device made up of a transformer, a power indication light, a bridge rectifier, a filtering capacitor, and a voltage stablizer, said direct current power supplying device serving as a source of power for driving said microcomputer unit, said water monitoring system, said driving circuit of said output unit and said switch system; and

a standby uninterrupted power source IC (52) having signal control pins respectively connected with the RESET pin of said central processing unit (11), with VDD pin and STBY pin or RESET pin of said time clock IC (14), VDD pin and CE pin of said RAM (15) and RST pins of said first interface circuit (18), said second interface circuit (19), said standby uninterrupted power source (52) serving as a power source on an emergency basis.

15. The control circuit device in accordance with claim 14, wherein said standby uninterrupted power source (52) has a VBAT pin and a GND pin which are respectively provided with a battery as a safeguard against a failure of said standby uninterrupted power source (52).

**Patentansprüche**

1. Intelligente und allumfassende Steuerschaltkreisvorrichtung einer Umkehrosmose-Trinkwasseranlage, mit:

einer Mikrocomputereinheit (10) zum Verarbeiten von funktionalen Signalen welche von verschiedenen peripheren Systemen empfangen werden,

einer Ausgabeeinheit (30) zum Anzeigen von Informationen, welche von der Mikrocomputereinheit (10) ausgearbeitet werden,

einem Schaltersystem (40), welches eine Tastatur zum Kommunizieren mit der Mikrocomputereinheit (10) aufweist, und

einem Elektrische Energie-Treibersystem (50), welches als Energiequelle für die Komponenten der Steuerschaltkreisvorrichtung dient,

**gekennzeichnet durch:**

ein Wasserüberwachungssystem (20) zum Überwachen der Qualität des erzeugten Wassers und zum Aussenden eines entsprechenden Qualitätssignals über seinen Ausgang an die Mikrocomputereinheit (10); und

Einrichtungen zum automatischen Reinigen der Umkehrosmose-Filterelemente entsprechend deren tatsächlicher Betriebsdauer, welche von der Mikrocomputereinheit (10) berechnet wird,

wobei die Ausgabeeinheit (30) eine vorzeitige Warnung zum Austausch der Umkehrosmose-Filterelemente ausgibt.

2. Die Steuerschaltkreisvorrichtung nach Anspruch 1, **dadurch gekennzeichet**, daß die Mikrocomputereinheit (10) umfaßt:

Eine zentrale Verarbeitungseinheit (11) mit Datenanschlußstiften (D0-D7), die an einen Datenbus (12) angeschlossen sind, Adressanschlußstiften (A0-A15), die an einen Adreßbus (13) angeschlossen sind, einem Datenleseanschlußstift (RD), der mit einem Anschlußstift ($\overline{OE}$) eines Direktzugriffspeichers RAM (15), einem Anschlußstift (OE), eines löschbaren und programmierbaren Nur-Lese-Speichers EPROM (16), einem Anschlußstift (14) eines verriegelten Verschlußdekoders (17), einem Anschlußstift (RW) eines ersten Schnittstellenschaltkreises (18), einem Anschlußstift (RD) eines zweiten Schnittstellenschaltkreises (19) und einem Anschlußstift (RD) eines analog/digital A/D-Wandlers (25), wobei die zentrale Verarbeitungseinheit (11) weiterhin Datenschreibanschlußstifte (WR), die mit einem Anschlußstift (WE) des RAM (15), einem Anschlußstift (13) des verriegelten Verschlußdekoders (17), einem Anschlußstift (WR) des ersten Schnittstellenschaltkreises (18), einem Anschlußstift (WR) des zweiten Schnittstellenschaltkreises (19) sowie einem Anschlußstift ($\overline{WR}$) des A/D-Wandlers (25) verbunden sind, aufweist zum Steuern des Zugriffs auf Daten wie einen part per million Wert, einen aktuellen Stand der Betriebsdauer der Filterelemente, einer Gesamtbetriebsdauer der Filterelemente, der Zeit;

wobei der Datenbus (12) als ein gemeinsamer Verbindungsleiter für Datenanschlußstifte (D0-D7) der zentralen Verarbeitungseinheit (11), eines Zeittakt-ICs (14), des RAM (15), des EPROM (16) des ersten Schnittstellenschaltkreises (18), des zweiten Schnittstellenschaltkreises (19) und des AD-Wandlers (25) dient;

wobei der Adreßbus (13) als gemeinsamer Verbindungsleiter für Adressanschlußstifte (A0-A15) der zentralen Verarbeitungseinheit (11), des RAM (15) sowie des EPROM (16) dient;

wobei das Zeittakt-ICs (14) Adressdatenanschlußstifte (AD0-AD7) bereitstellt, welche mit dem Datenbus (12) und mit einem Anschlußstift (IRQ), welcher an einem Unterbrechungsanschlußstift (INT) der zentralen Verarbeitungseinheit (10) angeschlossen ist, verbunden ist;

wobei das RAM (15) die Datenanschlußstifte (D0-D7), welche mit dem Datenbus (12) verbunden sind und Adressanschlußstifte (A0-A10), welche mit dem Adreßbus (13) verbunden sind, aufweist und Daten, wie die Zeit, die von dem Zeittakt-IC (14) berechnet wird, den part per million Wert, der durch das Wasserüberwachungssystem (20) ermittelt wird und den aktuellen Stand der Betriebsdauer der Filterelemente, speichert;

wobei das EPROM (16) Datenanschlußstifte (D0-D7), welche mit dem Datenbus (12) verbunden sind und Adressanschlußstifte (A0-A14), die an den Adreßbus (13) angeschlossen sind, aufweist und ein Schlüsselsuchprogramm, ein Selbstüberwachungsprogramm, ein Wasch-/Reinigungsprogramm, Wasserproduktionsvolumen-Berechnungsprogramm, ein automatisches Leseprogramm sowie auch die Beriebsdauern jedes der Filterelemente speichert;

wobei der verriegelte Verschlußdekoder (17) Anschlußstifte I0, I1, I2, I5, I6, I7, I8 und I9 aufweist, die jeweils mit Kontrollanschlußstiften M1, MREQ, IORQ, A13, A14, A15 und RFSH der zentralen Verarbeitungseinheit (11) und mit dem STBY Anschlußstift und dem RESET Anschlußstift des Zeittakt ICs (14) verbunden sind, wobei der Verschlußdekoder (17) weiterhin aufweist, Ausgabeendeanschlußstifte F0, F1, F2, F3, F4, F5, F6, und F8, welche jeweils mit dem CS-Anschlußstift des EPROM (16), den CEIN und WATCH-Anschlußstiften eines Standby Energiequellen-ICs (52), dem AS-Anschlußstift, dem DS-Anschlußstift und dem A/W-Anschlußstift des Zeittakt-ICs (14), dem CS-Anschlußstift des ersten Schnittstellenschaltkreises (18), und dem CS-Anschlußstift des zweiten Schnittstellenzeitkreises (19) verbunden ist, wobei der verriegelte Verschlußdekoder (17) zum Verriegeln und Dekodieren des Schlüsselsuchprogramms, des Selbstüberwachungsprogramms, des Wasch-/Reinigungsprogramms, des Wasserdurchsatzprogramms und des automatischen Leseprogramms dient,

wobei der erste Schnittstellenschaltkreis (18) Datenanschlußstifte (D0-D7), die mit dem Datenbus (12) verbunden sind, Anschlußstifte (A0, A1), die jeweils mit den Anschlußstiften A0 und A1 der zentralen Verarbeitungseinheit (11) und mit den Anschlußstiften A0 und A1 des zweiten Schnittstellenschaltkreises (19) verbunden sind, sowie Anschlußstifte PA0-PA2, die an einem Ausgabeende eines Treiberschaltkreises (31) angeschlossen sind, aufweist, wobei der erste Schnittstellenschaltkreis (18) als eine Datenübertragungschnittstelle zwischen dem Treiberschaltkreis (31), einem LCD-Anzeigeschaltkreis (32), einem Sprachschaltkreis (33), einem ersten Schaltersystem (41) und der zentralen Verarbeitungseinheit (11) dient; und

wobei der zweite Schnittstellenschaltkreis (19) Datenanschlußstifte (D0-D7), die an den Datenbus (12) angeschlossen sind, aufweist und als eine Datenübertragungsschnittstelle zwischen dem AM/FM-Schaltkreis (36) und der zentralen Verarbeitungseinheit (11) dient.

3. Die Steuerschaltkreisvorrichtung nach Anspruch 2, **dadurch gekennzeichnet**, daß das Schlüsselsuchprogramm die zentrale Verarbeitungseinheit (11) anweist, ein Schlüsselfunktionsdienstprogramm, welches in dem EPROM (16) gespeichert ist, zu suchen, wenn wenigstens ein Schlüssel des ersten Schnittstellenschaltkreises des ersten Schlüsselsystems geerdet ist.

4. Die Steuerschaltkreisvorrichtung nach Anspruch 2 oder 3, **dadurch gekennzeichnet**, daß das Schlüsselfunktionsdienstprogramm die Funktion jedes Schlüssels benennt und in Form eines Unterbrechnungsdienstprogramms geschrieben ist.

5. Die Steuerschaltkreisvorrichtung nach einem der Ansprüche 2 bis 4, **dadurch gekennzeichnet**, daß das Selbstüberwachungsprogramm die zentrale Verarbeitungseinheit (11) anweist, in dem EPROM (16) gespeicherte Daten mit Daten zu vergleichen, die von dem Zeittakt-IC (14), dem RAM (15), dem verriegelten Verschlußdekoder (17), dem ersten Schnittstellenschaltkreis (18), dem zweiten Schnittstellenschaltkreis (19), dem A/D-Wandler (25), dem LCD-Anzeigeschaltkreis (32) sowie dem Sprachschaltkreis (33) gesendet werden, um festzustellen, ob ein fehlerhafter Punkt in der Steuerschaltkreisvorrichtung existiert.

6. Die Steuerschaltkreisvorrichtung nach einem der Ansprüche 2 bis 5, **dadurch gekennzeichnet**, daß das Wasch-/Reinigungsprogramm auf Angaben des Herstellers der Filterelemente basiert, wobei es sich bei den Angaben um die Betriebsdauern der Filterelemente, einen Zeitplan zum Waschen und Reinigen der Filterelemente sowie ein Wasserproduktionsvolumen (cc/min) einer Pumpe handelt.

7. Die Steuerschaltkreisvorrichtung nach einem der Ansprüche 2 bis 6, **dadurch gekennzeichnet**, daß das Wasserproduktionsvolumen-Berechnungsprogramm auf der Basis des Wasserproduktionsvolumens (cc/min) der Pumpe (M) geschrieben ist, um einen kumulierten Wert für eine Reihe von Wasserproduktionsvolumen für jedes der Filterelemente zu berechnen, wobei die Reihen von Wasserproduktionsvolumen an das RAM (1) übertragen werden und wobei der kumulierte Wert an die zentrale Verarbeitungseinheit (11) übertragen wird, welche den kumulierten Wert mit einer bewerteten Betriebsdauer für jedes der Filterelemente vergleicht, wobei die bewerteten Betriebsdauern in dem EPROM (16) gespeichert sind.

8. Die Steuerschaltkreisvorrichtung gemäß einem der Ansprüche 2 bis 7, **dadurch gekennzeichnet**, daß das automatische Leseprogramm dazu dient, Daten wie die Reihen der Wasserproduktionsvolumen für jedes der Filterelemente, den kumulierten Wert der Reihen der Wasserproduktionsvolumen für jedes der Filterelemente, den PPM-Wert, den Anzeigestatus des fehlerhaften Punktes in der Steuerschaltkreisvorrichtung, den aktuellen Stand der Benutzung einer Umkehrosmosemembran und den aktuellen Stand der Benutzung von jedem der Filterelemente aus dem RAM (15) auszulesen.

9. Die Steuerschaltkreisvorrichtung nach einem der Ansprüche 1 bis 8, **dadurch gekennzeichnet**, daß das Wasserüberwachungssystem (20) umfaßt:

    eine Wasserqualität-Testeinrichtung (21), welche ein Testsignaleingabeende aufweist, das in einem Wassertank (S) angeordnet ist zum Testen des part per million Wertes;

    einen ersten Verstärkungsschaltkreis (22), bestehend aus einem Lastwiderstand (R10, R11, R12, R13) und einer ersten Operationsverstärkereinrichtung (221), welche ein nichtgegensätzliches Phasenende aufweist, welches mit einem Mittelpunkt des Lastwiderstandes R10 und R11, die in Reihe geschaltet sind, verbunden ist, wobei die erste Operationsverstärkereinrichtung (221) weiterhin ein gegensätzliches Phasenende aufweist, welches in einer parallelen Weise mit einem Ausgangsende davon und einem Ende des Lastwiderstandes R12 verbunden ist, wobei der Lastwiderstand R12 und R13 einen Mittelpunkt aufweist, der mit einem nichtgegensätzlichen Phasenende einer vierten Operationsverstärkereinrichtung (26) verbunden ist;

    einen zweiten Verstärkungsschaltkreis (23), der den Lastwiderstand (R14, R15) und eine zweite Operationsverstärkereinrichtung (231) aufweist, die ein gegensätzliches Phasenende besitzt, welches in paralleler Weise mit einem Ausgangsende der Wasserqualität-Testeinrichtung (21) und mit einem Ende des Lastwiderstandes (R14) verbunden ist, wobei die zweite Operationsverstärkereinrichtung (231) weiterhin ein nichtgegensätzliches Phasenende aufweist, das in paralleler Weise mit einem Ausgangsende davon und einem Ende des Lastwiderstandes (R15) verbunden ist, welcher ein anderes Ende aufweist, das mit dem nichtgegensätzlichen Phasenende der vierten Operationsverstärkereinrichtung (26) verbunden ist;

    einen Rückkopplungsverstärkungsschaltkreis (24), der einen Lastwiderstand (R16, R17), einen variablen Widerstand (R18) und eine dritte Operationsverstärkereinrichtung (241) aufweist, welche ein nichtgegensätzliches Phasenende besitzt, das geerdet ist und ein gegensätzliches Phasenende besitzt, das in paralleler Weise mit dem Lastwiderstand (R16) und einem Ende des variablen Widerstandes (R18) verbunden ist, wobei die dritte Operationsverstärkereinrichtung (241) ein Ausgangsende aufweist, welches jeweils mit einem anderen Ende des Lastwiderstandes (R16) und einem Ende des Lastwiderstandes (R17) verbunden ist, dessen anderes Ende mit dem nichtgegensätzlichen Phasenende einer vierten Operationsverstärkereinrichtung (26) verbunden ist; und

    einen A/D-Wandler (25), der Datenanschlußstifte (DB0-DB7), die mit dem Datenbus (12) verbunden sind, einen VI-Anschlußstift, der mit einem Ausgangsende der vierten Operationsverstärkereinrichtung (26) sowie mit einem anderen Ende des variablen Widerstandes (R18) der dritten Operationsverstärkereinrichtung (241) verbunden ist, und einen INTR-Anschlußstift, welcher mit dem Eingangsanschlußstift (PB6) des ersten Schnittstellenschaltkreises (18) verbunden ist, aufweist, wobei der Analog/Digital-Wandler (25) dazu dient, ein analoges Signal von der vierten Operationsverstärkereinrichtung (26) zu empfangen, welches dann von dem A/D-Wandler (25) in ein digitales Signal umgewandelt wird.

10. Die Steuerschaltkreisvorrichtung nach einem der Ansprüche 1 bis 9, wobei die Ausgabeeinheit (30) umfaßt:

    einen Treiberschaltkreis (31), der mit den Ausgangsanschlußstiften des ersten Schnittstellenschaltkreises (18) verbunden ist und dazu dient, die Pumpe (M), ein elektromagnetisches Ventil sowie ein Anzeigelicht (L1-L4) anzusteuern;

einen LCD-Anzeigeschaltkreis (32), der Datenanschlußstifte (001-007), Freigabeanschlußstifte, Lese/Schreibanschlußstifte, welche mit den Datenausgabeanschlußstiften (PC0-PC7, PA6, PA7) des ersten Schnittstellenschaltkreises (18) verbunden sind, aufweist, wobei der LCD-Anzeigeschaltkreis (32) dazu dient, Daten anzuzeigen, welche in dem RAM (15) gespeichert sind;

einen Sprachschaltkreis (33), welcher mit den Ausgabepunkten (PA3-PA5) des ersten Schnittstellenschaltkreises (18) verbunden ist und ein Spracherzeugungs-IC sowie einen Lautsprecher (SP) aufweist, wobei der Sprachschaltkreis (33) dazu dient, Signale, die auf einen fehlerhaften Punkt in der Steuerschaltkreisvorrichtung hinweisen oder nach einem Austausch der Filterelemente rufen, zu empfangen, wobei die Signale von dem Selbstüberwachungsprogramm erkannt werden; und

einen AM/FM-Schaltkreis (36), der Datenanschlußstifte aufweist, die mit dem Datenbus (12) verbunden sind, wobei der AM/FM-Schaltkreis (36) weiterhin einen Kontrollsignalanschlußstift aufweist, der mit dem Eingangsanschlußstift des ersten Schnittstellenschaltkreises (18) verbunden ist, wobei der AM/FM-Schaltkreis (36) dazu dient, Radiosignale von einer Radiostation zu empfangen, die nachfolgend an die Mikrocomputereinheit (10) übertragen werden, um in akustische Signale umgewandelt zu werden.

11. Die Steuerschaltkreisvorrichtung nach Anspruch 10, **dadurch gekennzeichnet**, daß der Treiberschaltkreis (31) der Ausgabeeinheit (30) eine erste Treibereinrichtung (311), eine zweite Treibereinrichtung (312), eine dritte Treibereinrichtung (313), ein Betriebsanzeigelicht (L1), ein Wasserdurchsatzanzeigelicht (L2), ein Wasch-/Reinigungsanzeigelicht (L3), eine Pumpe, ein erstes elektromagnetisches Ventil und ein zweites elektromagnetisches Ventil aufweist, wobei die erste Treibereinrichtung (311), die zweite Treibereinrichtung (312) und die dritte Treibereinrichtung (313) jeweils ein Gleichspannungsende aufweisen, das mit dem Ausgabeanschlußstift des ersten Schnittstellenschaltkreises (18) verbunden ist und weiterhin jeweils ein Wechselspannungsende aufweisen, das jeweils mit einem Anschlußstift des Betriebsanzeigelichtes (L1), dem Wasserdurchsatzanzeigelicht (L2) und dem Wasch-/Reinigungsanzeigelicht (L3) verbunden ist, wobei das Betriebsanzeigelicht (L1), das Wasserdurchsatzanzeigelicht (L2) und das Wasch-/Reinigungsanzeigelicht (23) jeweils noch einen anderen Anschlußstift aufweisen, der jeweils mit der Pumpe (M), dem ersten elektromagnetischen Ventil (SOL1) und dem zweiten elektromagnetischen Ventil (SOL2) verbunden ist.

12. Die Steuerschaltkreisvorrichtung nach Anspruch 10 oder 11, **dadurch gekennzeichnet**, daß der Sprachschaltkreis (33) der Ausgabeeinheit durch einen Tonschaltkreis, der summen kann, oder durch einen Lichtschaltkreis, der leuchten kann, ersetzt werden kann.

13. Die Steuerschaltkreisvorrichtung nach einem der Ansprüche 1 bis 12, dadurch gekennzeichnet, daß das Schaltersystem (40) aus einem Satz von Tastensystemen besteht, welches eine Taste SW1 zum Starten der Steuerschaltkreisvorrichtung, eine Taste SW2 zum Einstellen von Daten in Verbindung mit dem Austausch eines ersten Filterelementes, eine Taste SW3 zum Einstellen von Daten in Verbindung mit dem Austausch eines zweiten Filterelementes, eine Taste SW4 zum Einstellen von Daten, eine Taste SW5 zum Suchen von Daten, eine Taste SW6 zum Starten eines Wasserdurchsatzschalters, eine Taste SW7 zum Waschen und Reinigen der Filterelemente per Hand und einer Taste zum Starten des AM/FM-Schaltkreises aufweist, wobei alle Verbindungspunkte der Tasten SW1, SW2, SW3, SW4, SW5, SW6 und SW7 mit einem der Ausgabe/Eingabeanschlußstifte des ersten Schnittstellenschaltkreises (18) verbunden sind, wobei der Verbindungspunkt der Taste SW8 zum Starten des AM/FM-Schaltkreises (36) dient und mit dem Schaltanschlußstift des AM/FM-Schaltkreises verbunden ist.

14. Die Steuerschaltkreisvorrichtung nach einem der Ansprüche 1 bis 13, **dadurch gekennzeichnet**, daß das Elektrische Energie-Treibersystem (50) umfaßt:

eine Gleichspannungsenergieversorgungseinrichtung, die aus einem Transformator, einem Energieanzeigelicht, einem Brückengleichrichter, einem Filterkondensator und einem Spannungsstabilisator gebildet ist, wobei die Gleichspannungsenergieversorgungseinrichtung als Energiequelle zum Ansteuern der Mikrocomputereinheit, des Wasserüberwachungssystems, des Ansteuerschaltkreises der Ausgabeeinheit und des Schaltersystems dient; und

eine Standby-nichtunterbrochene Energiequellen-IC (52), welches Kontrollsignalanschlußstifte aufweist, die jeweils mit dem RESET-Anschlußstift der zentralen Verarbeitungseinheit (11), mit dem VDD-Anschlußstift und dem STBY-Anschlußstift oder dem RESET-Anschlußstift des Zeittakt-ICs (14), dem VDD-Anschlußstift und dem CE-Anschlußstift des RAM (15) und den RST-Anschlußstiften des ersten und des zweiten Schnittstellenzeitkreises (18, 19) verbunden sind, wobei die Standby-nichtunterbrochene Energiequelle (52) als eine Energiequelle auf Notfallbasis dient.

15. Die Steuerschaltkreisvorrichtung nach Anspruch 14, **dadurch gekennzeichnet**, daß die Standby-nichtunterbrochene Energiequelle (52) einen VBAT-Anschlußstift und einen GND-Anschlußstift aufweist, die jeweils mit einer Batterie zum Schutz gegen einen Fehler der Standby-nichtunterbrochenen Energiequelle (52) verbunden sind.

## Revendications

1. Dispositif circuit de contrôle multivoies de machine pour eau potable à osmose d'inversion, comprenant:

   a) une unité informatique ( 10 ) pour le traitement des signaux fonctionnels reçus depuis les différents systèmes périphériques.
   b) une unité de sortie ( 30 ) pour l'affichage des informations traitées par l'unité informatique ( 10 ).
   c) un système de boutons ( 40 ) portant les touches pour communiquer avec l'unité informatique ( 10 ).
   d) un système d'alimentation électrique ( 50 ) servant de source d'électricité pour l'ensemble du circuit.

   Caractérisé par:

   un système de contrôle de l'eau ( 20 ) pour contrôler la qualité de l'eau produite et envoyer un signal de qualité correspondant à l'unité informatique ( 10 ) via sa sortie et

   des méthodes de nettoyage automatique des éléments de filtrage selon leur durée d'utilisation calculée par l'unité informatique ( 10 )

   où l'unité de sortie ( 30 ) donne un signal d'avertissement pour le remplacement des éléments de filtrage.

2. Selon la Revendication 1, le dispositif de contrôle comprend:

   une unité centrale de traitement ( 11 ) équipée avec des fiches d'informations ( DO-D7 ) connectées avec un bus d'informations ( 12 ), des fiches d'adresse ( A0-A15 ) connectées avec un bus d'adresse ( 13 ), des fiches de lecture d'informations ( RD ) connectées avec une fiche ( OE ) de la mémoire vive ( 15 ), une fiche de la mémoire morte programmable et effaçable ( 16 ), une fiche ( 14 ) du décodeur verrouillé ( 17 ), une fiche ( RD ) du premier circuit interface ( 18 ), une fiche ( WR ) du second circuit interface ( 19 ), une fiche ( WR ), du convertisseur A/D ( 25 ) pour contrôler l'accès d'informations comme la valeur PPM, la durée d'utilisation des éléments de filtrage, l'heure, etc.

   où le bus d'informations ( 12 ) sert de conducteur de connection commune pour les fiches d'informations ( D0-D7 ), de l'unité centrale de traitement ( 11 ), l'horloge CI ( 14 ), la mémoire vive ( 15 ), la mémoire morte programmable et effaçable ( 16 ), le premier circuit interface ( 18 ), le second circuit interface ( 19 ) et le convertisseur A/D ( 25 ).

   où le bus d'adresse ( 13 ) sert de conducteur de connection commune pour les fiches d'adresse ( A0-A15 ) de l'unité centrale de traitement ( 11 ), la mémoire vive ( 15 ) et la mémoire morte programmable et effaçable ( 16 ).

   où l'horloge CI ( 14 ) est équipée avec les fiches d'informations et d'adresse ( AD0-AD7 ) connectées avec le bus d'informations ( 12 ) et avec la fiche ( IRQ ) connectée avec la fiche d'interruption ( INT ) de l'unité centrale de traitement ( 11 ).

   où la mémoire vive ( 15 ) est équipée avec les fiches d'informations ( D0-D7 ) connectées avec le bus d'informations ( 12 ) et les fiches d'adresse ( A0-A10 ) connectées avec le bus d'adresse ( 13 ); elle contient les informations commele temps calculé par l'horloge CI ( 14 ), la valeur PPM détectée par le système de contrôle de l'eau ( 20 ) et la durée d'utilisation des éléments de filtrage.

   où la mémoire morte programmable et effaçable ( 16 ) est équipée avec les fiches d'informations ( D0-D7 ) connectées avec le bus d'informations ( 12 ) et avec les fiches d'adresse ( A0-A14 ) connectées avec le bus d'adresse ( 13 ); elle contient les programmes de recherche de touche, d'auto-contrôle, de nettoyage, de calcul du volume d'eau à produire, de lecture automatique aussi bien que la durée d'utilisation de chaque élément de filtrage.

où le décodeur verrouillé ( 17 ) est équipé avec les fiches I0, I1, I2, I5, I6, I7, I8 et I9 connectées respectivement avec les fiches de contrôle M1, MREQ, IORQ, A13, A14, A15 et RFSH de l'unité centrale de traitement (11) ainsi qu'avec la fiche ATTENTE ou RESTAURATION de l'horloge CI ( 14 ); le décodeur est également équipé avec les fiches de sortie F0, F1, F2, F3, F4, F5, F6 et F8 connectées respectivement avec la fiche CS de la mémoiret morte programmable et effaçable ( 16 ), les fiches CEIN et MONTRE de la source CI de courant continu ( 52 ), les fiches AS, DS et A/W de l'horloge CI ( 14 ), la fiche CS du premier circuit interface ( 18 ), la fiche CS du second circuit interface ( 19 ). Le décodeur sert pour bloquer et décoder les programmes de recherche de touche, d'auto-contrôle, de nettoyage, de calcul du volume d'eau à produire et de lecture automatique.

où le premier circuit interface ( 18 ) possède les fiches d'informations ( D0-D7 ) connectées avec le bus d'informations ( 12 ), les fiches ( A0, A1 ) connectées respectivement avec les fiches A0 et A1 de l'unité centrale de traitement ( 11 ) et les fiches A0 et A1 du second circuit interface ( 19 ), ainsi que les fiches PA0-PA2 connectées avec la sortie du circuit conducteur ( 31 ); il sert comme interface de transmission d'informations parmi le circuit conducteur ( 31 ), le circuit d'affichage ( 32 ), le circuit vocal ( 33 ), le premier système de boutons ( 41 ) et l'unité centrale de traitement ( 11 ).

où le second circuit interface ( 19 ) possède les fiches d'informations ( D0-D7 ) connectées avec le bus d'informations ( 12 ) et sert comme interface de transmission d'informations entre le circuit AM-FM ( 36 ) et l'unité centrale de traitement ( 11 ).

3. Selon la revendication 2, le programme de recherche de touche du dispositif de contrôle demande à l'unité centrale de traitement ( 11 ) de chercher le programme de fonction de touche stocké dans la mémoire morte programmable et effaçable ( 16 ), lorsqu'au moins une touche du premier circuit interface du premier système de boutons est est effleurée.

4. Selon les revendication 2 et 3, le programme de fonction du dispositif de contrôle désigne la fonction de chaque touche et est écrit sous la forme d'un programme d'interruption.

5. Selon les revendication 2 à 4, le programme d'auto-contrôle du dispositif de contrôle demande à l'unité centrale de traitement ( 11 ) de comparer les informations stockées dans la mémoire morte programmable et effaçable ( 16 ) avec celles transmises depuis l'horloge CI ( 14 ), la mémoire vive ( 15 ), le décodeur verrouillé ( 17 ), le premier circuit interface ( 18 ), le second circuit interface ( 19 ), le convertisseur A/D ( 25 ), le circuit d'affichage ( 32 ) et le circuit vocal ( 33 ), afin de déterminer s'il y a une erreur dans le dispositif de contrôle.

6. Selon les revendication 2 à 5, le programme de nettoyage du dispositif de contrôle est basé sur les spécifications du fabricant des éléments de filtrage, qui sont les durées d'utilisation des éléments de filtrage, leurs temps de nettoyage et le volume de production d'eau ( cc/minute ) de la pompe M.

7. Selon les revendication 2 à 6, le programme de calcul du volume d'eau à produire du dispositif de contrôle est écrit sur la base du volume de production ( cc/minute ) de la pompe ( M ), afin de pouvoir estimer une valeur cumulée pour chaque élément de filtrage, les séries de volumes étant transmises à la mémoire vive ( 15 ) et la valeur cumulée étant transmise à l'unité centrale de traitement ( 11 ) qui compare cette dernière avec la durée d'utilisation de chaque élément de filtrage, stockée dans la mémoire morte programmable et effaçable ( 16 ).

8. Selon les revendication 2 à 7, le programme de lecture automatique du dispositif de contrôle est prévu pour lire les informations depuis la mémoire vive ( 15 ), comme les volumes de production d'eau et la valeur cumulée de chaque élément de filtrage, la valeur PPM, l'état d'affichage du point d'erreur dans le dispositif de contrôle, l'état actuel d'utilisation de la membrane d'osmose d'inversion et des éléments de filtrage.

9. Selon les revendication 2 à 8, le système de contrôle de l'eau ( 20 ) du dispositif de contrôle comprend:

un dispositif de test de qualité ( 21 ) possédant une entrée de test de signal disposée dans un réservoir d'eau ( S ) pour tester la valeur PPM.

un premier circuit amplificateur ( 22 ) composé de résistances de charge ( R10, R11, R12 et R13 ) et du premier dispositif amplificateur d'opération ( 221 ) équipé avec une phase non-oppoée connectée avec le point moyen des résistances R10 et R11, connectées elle-mêmes en séries; ce dispositif amplificateur d'opération ( 221 ) est équipé avec une phase opposée connectée parallèlement avec les résistances de charge R12 et R13, celles-ci ayant un point moyen connecté avec la phase non-opposée du quatrième dispositif amplificateur d'opération ( 26 ).

un second circuit amplificateur ( 23 ) composé de résistances de charge ( R14, R15 ) et du second dispositif amplificateur d'opération ( 231 ) possédant une phase opposée connectée parallèlement avec la sortie du dispositif de test de qualité ( 21 ) et avec la résistance de charge R14; le second dispositif amplificateur d'opération ( 231 ) possédant une phase non-opposée connectée parallèlement avec de charge R15 ayant une autre sortie connectée avec la phase non-opposée du quatrième dispositif amplificateur d'opération ( 26 ).

un circuit amplificateur rétroactif ( 23 ) composé des résistances de charge R16 et R17, de la résistance variable R18 et du troisième dispositif amplificateur d'opération ( 241 ) possédant une phase non-opposée et une autre phase opposée connectée parallèlement avec la résistance de charge R16 et la résistance variable R18; le troisième dispositif amplificateur d'opération ( 241 ) possède une sortie connectée avec les résistances de charge R16 et R17 connectées elles-mêmes avec la phase non-opposée du quatrième dispositif amplificateur d'opération ( 26 ).

un convertisseur A/D ( 25 ) possédant des fiches d'informations ( DBO-DB7 ) connectées avec le bus d'informations ( 12 ), une fiche VI connectée avec la sortie du quatrième dispositif amplificateur d'opération ( 26 ) et avec la résistance variable ( R18 ) du troisième dispositif amplificateur d'opération ( 241 ), ainsi que d'une fiche INTR connectée avec la fiche d'entrée ( PB6 ) du premier circuit interface ( 18 ); le convertisseur A/D ( 25 ) sert pour la réception d'un signal analogique depuis le quatrième dispositif amplificateur d'opération ( 26 ), converti ensuite en un signal numérique.

10. Selon les revendication 1 à 9, l'unité de sortie ( 30 ) du dispositif de contrôle comprend:

un circuit conducteur ( 31 ) connecté avec les fiches de sortie du premier circuit interface ( 18 ), et est prévu pour conduire la pompe ( M ), les valves électromagnétiques et les lumières indicatrices ( L1 -L4 ).

un circuit d'affichage ( 32 ) possédant des fiches d'informations ( 001-007 ), des fiches d'activation et des fiches de lecture/écriture, connectées avec les fiches d'informations ( PC0-PC7, PA6, PA7 ) du premier circuit interface ( 18 ); le circuit d'affichage ( 32 ) sert pour l'affichage des informations stockées dans la mémoire vive ( 15 ).

un circuit vocal ( 33 ) connectée avec les fiches de sortie ( PA3-PA5 ) du premier circuit interface ( 18 ) et est composé d'un synthétiseur vocal CI et d'un haut-parleur ( SP ); le circuit vocal ( 33 ) sert pour la réception de signaux avertissant l'apparition d'erreurs dans le dispositif de contrôle ou appelant pour le remplacement des éléments de filtrage, ces signaux étant détectés par le programme d'auto-contrôle.

un circuit AM/FM ( 36 ) possédant des fiches d'informations connectées avec le bus d'informations ( 12 ), ainsi qu'une fiche de contrôle de signal connectée avec la fiche d'entrée du premier circuit interface ( 18 ); il sert pour la réception des stations radio, afin de les convertir en signaux accoustiques transmis ensuite à l'unité informatique ( 10 ).

11. Le circuit conducteur ( 31 ) de l'unité de sortie ( 30 ) dans le dispositif de contrôle comprend des dispositifs conducteurs 311, 312 et 313, une lumière indicatrice d'opéra tion ( L1 ), une lumière indicatrice de production d'eau ( L2 ), une lumière indicatrice de nettoyage ( L3 ), une pompe, deux valves électromagnétiques; ces trois dispositifs conducteurs possèdent respectivement une sortie directe connectée avec les fiches de sortie du premier circuit interface ( 18 ), ainsi qu'une sortie alternative connectée respectivement avec une fiche des lumières L1, L2 et L3, ayant une autre fiche connectée avec la pompe ( M ) et les deux valves magnétiques SOL1 et SOL2.

12. Le circuit vocal ( 33 ) de l'unité de sortie dans le dispositif de contrôle peut être remplacé par un circuit sonore ou par un circuit lumineux.

13. Selon les revendication 1 à 12, le système de boutons ( 40 ) du dispositif de contrôle est composé d'un ensemble de systèmes de touches comprenant la touche SW1 pour faire commencer le dispositif de contrôle, la touche SW2 pour programmer les informations en relation avec le remplacement du premier élément de filtrage, la touche SW3 pour programmer les informations en relation avec le remplacement du deuxième élément de filtrage, la touche SW4 pour programmer d'autres informations, la touche SW5 pour la recherche d'informations, la touche SW6 pour commencer le travail de production d'eau, la touche SW7 pour nettoyer manuellement les éléments de filtrage et une touche pour faire commencer le circuit AM/FM; tous les points de connection de ces touches sont connectés avec les fiches d'entrée/sortie du premier circuit interface ( 18 ). Le point de connection de la touche SW8 est quant à lui utilisé pour faire démarrer le circuit AM/FM ( 36 ) et est connecté avec les fiches de touche de ce circuit.

14. Selon les revendication 1 à 13, le système d'alimentation électrique ( 50 ) du dispositif de contrôle comprend:

un dispositif d'alimentation en électricité fait d'un tranformateur, d'une lumière indicatrice de courant, d'un rectificateur-pont, d'un condensateur de filtrage et d'un stabilisateur de voltage; ce dispositif sert comme source d'alimentation en électricité pour l'unité informatique, le système de contrôle de l'eau, le circuit conducteur de l'unité de sortie et le système de boutons.

une source CI de courant continu ( 52 ) possédant des fiches de contrôle de signal connectées respectivement avec la fiche RESTAURATION de l'unité centrale de traitement ( 11 ), la fiche VDD et ATTENTE ou RESTAURATION de l'horloge CI ( 14 ), la fiche VDD et CE de la mémoire vive ( 15 ), ainsi qu'avec les fiches RST du premier circuit interface ( 18 ) et du second circuit interface ( 19 ). Cette source de courant continu ( 52 ) sert comme source d'électricité en cas d'urgence.

15. Selon la revendication 14, la source CI de courant continu ( 52 ) du dispositif de contrôle possède une fiche VBAT et une fiche GND, connectées respectivement avec une pile, comme protection contre toute panne de cette source.

# FIG.1

**FIG.2**

EP 0 653 239 B1

FIG.3

FIG.4

FIG.5

**FIG.6**